# EUROPÄISCHE PATENTANMELDUNG

(11) **EP 0 789 049 A1**
(43) Veröffentlichungstag der Anmeldung: **13.08.1997**
(21) Anmeldenummer: 97810045.1
(22) Anmeldetag: 30.01.1997
(51) Int. Cl.: C08J 5/06, C08K 13/04, B29C 47/00, C08K 9/04

(54) **Antistatisch ausgerüstete Polymere**

(30) Priorität: 09.02.1996 CH 333/96
(71) Anmelder: Ciba Specialty Chemicals Holding Inc., 4057 Basel (CH)
(72) Erfinder: Hilti, Bruno, 4054 Basel (CH); Bürkle, Markus, 4127 Birsfelden (CH); Pfeiffer, Jürgen, 4153 Reinach (CH); Minder, Ernst, 4450 Sissach (CH); Grob, Markus, 4123 Allschwil (CH)

(57) **Zusammenfassung**

Die Erfindung betrifft eine Zusammensetzung, enthaltend ein thermoplastisches, strukturvernetztes elastomeres oder duroplastisches Polymer, welches
(a) ein polares, adsorptives anorganisches oder organisches Material in Form von sich berührenden Teilchen oder Fasern enthält, an die
(b) ein polares Antistatikum aus einer Mischung von
   b1) mindestens einer polaren organischen Verbindung mit mindestens 5 Kohlenstoffatomen und mindestens 3 Heteroatomen, und
   b2) das Salz einer anorganischen Protonensäure, das in der polaren organischen Verbindung solvatisiert oder komplexiert ist, adsorptiv gebunden ist. Die Erfindung betrifft weiter zweite Zusammensetzung enthaltend b) ein polares anorganisches oder organisches Material, b1) eine polare organische Verbindung mit mindestens 5 Kohlenstoffatomen und mindestens 3 Heteroatomen und b2) ein anorganisches Salz, die Verwendung dieser zweiten Zusammensetzung für die antistatische Ausrüstung von Polymeren und ein Verfahren zur Herstellung von antistatisch ausgerüsteten Polymeren.

## Beschreibung

Die Erfindung betrifft eine Zusammensetzung, enthaltend ein thermoplastisches, strukturvernetztes elastomeres oder duroplastisches Polymer, welches
(a) ein polares, adsorptives anorganisches oder organisches Material in Form von sich berührenden Teilchen oder Fasern enthält, an die
(b) ein polares Antistatikum aus einer Mischung von
   b1) mindestens einer polaren organischen Verbindung mit mindestens 5 Kohlenstoffatomen und mindestens 3 Heteroatomen, und
   b2) das Salz einer anorganischen Protonensäure, das in der polaren organischen Verbindung solvatisiert oder komplexiert ist, adsorptiv gebunden ist. Die Erfindung betrifft weiter eine zweite Zusammensetzung enthaltend b) ein polares anorganisches oder organisches Material, b1 ) eine polare organische Verbindung mit mindestens 5 Kohlenstoffatomen und mindestens 3 Heteroatomen und b2) ein anorganisches Salz, die Verwendung dieser zweiten Zusammensetzung für die antistatische Ausrüstung von Polymeren und ein Verfahren zur Herstellung von antistatisch ausgerüsteten Polymeren.

Es ist bekannt, dass Polymere einer starken elektrostatischen Aufladung unterliegen und einmal aufgebrachte Ladungen wegen der geringen elektrischen Leitfähigkeit von Polymeren nur langsam abgeführt werden können. Neben ästhetischen Gründen erfordern jedoch vielfach Sicherheitsaspekte einen raschen Ladungsabfluss. An Beeinträchtigungen beim Gebrauch lassen sich nennen: Verschmutzung von Polymeroberflächen, elektrische Schläge von Personen bei Kontakt mit Polymeren, Produktionsstörungen durch Verkleben von Folienbahnen, Zerstörung von elektronischen Bauteilen, Klumpenbildung bei Polymerpulvern und Funkenbildung durch zu starke Aufladungen mit nachfolgender Zündung, was schon öfter zu schweren Explosionen geführt hat.

Es ist bekannt, eine statische Aufladung durch den Zusatz von Additiven zu begrenzen, welche die Oberflächenleitfähigkeit verbessern. Diese Stoffe haben jedoch den Nachteil, dass sie bei geringer Luftfeuchtigkeit praktisch unwirksam sind. Es ist daher besser, Additive zu verwenden, welche die Volumenleitfähigkeit erhöhen. Die bekannten Stoffe zur Erhöhung der Volumenleitfähigkeit, beispielsweise Russ oder Metallpulver, setzten jedoch die mechanischen Eigenschaften der Polymeren herab und sind für transparente Polymere nicht anwendbar. Hinzu kommt immer häufiger die Forderung, dass Additive ökologisch unbedenklich sein sollen.

Weitere Ausführungen zu antistatischen Additiven und dem Mechanismus der statischen Aufladung finden sich beispielsweise im "Plastics Additives Handbook", Herausgeber R. Gächter und H. Müller, Hanser Verlag, 3.Auflage, 1990, Seiten 749-775.

Um eine permanente antistatische Ausrüstung zu erreichen, wurde bereits in der DE 4 324 062 vorgeschlagen, Materialien mit grosser Oberfläche wie zum Beispiel Fasern mit einem halbleitenden farblosen Material wie zum Beispiel Zinnoxid zu beschichten. Dieses beschichtete Material kann dann dem Polymergranulat zugemischt und mit diesem verarbeitet werden. Die Herstellung dieser Beschichtung ist allerdings aufwendig, da um die halbleitende Beschichtung herzustellen, es notwendig ist, das faserförmige Trägermaterial mit einer wässrigen Salzlösung zu tränken, anschliessend zu trocknen und eine darauf folgende thermische Konditionierung des abgeschiedenen Salzes vorzunehmen. Diese chemischen und thermischen Prozesse auf der Faser können die Faser schädigen, so dass es zu einer geringeren Leitfähigkeit kommen kann, als von der Leitfähigkeit der Halbleiter zu erwarten wäre. Ein weiterer Nachteil ist, dass die Fasern durch mechanische Belastung knicken, und der spröde Halbleiterüberzug beschädigt werden kann und dadurch die Leitfähigkeit ebenfalls beeinträchtigt wird.

Eine andere Möglichkeit wird in der DE 43 16 607 beschrieben. Dort wird vorgeschlagen, metallisierte Kunststoffasem, wie sie sich bereits im Handel befinden, Schmier-, Kleb-, oder Beschichtungsstoffen zuzusetzen und damit deren elektrische Leitfähigkeit zu erhöhen. Metallisierte Fasern sind jedoch relativ teuer, aufwendig herzustellen und setzen die Transparenz des Polymers, in das sie eingearbeitet werden stark herab. Mechanische Schädigungen der leitfähigen Schicht und selbst der Faser (Bruch) können auch hier nicht ganz vermieden werden.

Es besteht daher weiterhin das Bedürfnis nach einem antistatisch wirkenden, ökologisch unbedenklichen und bei geringer Luftfeuchtigkeit wirksamen Additivsystem für die Erhöhung der Volumenleitfähigkeit, das einfach herstellbar ist, die erzielte Volumenleitfähigkeit des Polymeren über einen langen Zeitraum erhält und ohne nennenswerte Einschränkung in allen handelsüblichen Polymeren eingesetzt werden kann.

Es wurde nun gefunden, dass polare organische Verbindungen aus mindestens 5 Kohlenstoffatomen und mindestens 3 Heteroatomen in Kombination mit einem anorganischen Salz an der Oberfläche oder in den Poren von anorganischen oder organischen Materialien als Adsorbens adsorptiv gebunden, in thermoplastische, strukturvernetzte oder härtbare Polymere (vernetzbare Polymere) eingearbeitet werden können, und diesen eine hervorragende und dauerhafte antistatische Wirkung verleihen.

Weist das polare anorganische oder organische Material Poren auf, so können die organischen Verbindungen mit den anorganischen Salzen darin eingelagert und adsorbiert werden, was zu besonders beständigen antistatischen Ausrüstungen führt.

Von ganz besonderem Vorteil ist, dass selbst relativ niedermolekulare Kombinationen aus polaren oder oberflächenaktiven Verbindungen und anorganischen Salzen, die sonst zu einem Ausschwitzen an der Oberfläche des polymeren Materials neigen, zunächst durch Adsorption an das polare anorganische oder organische Material gebunden werden.

Die ein Salz enthaltenden, polaren organischen Verbindungen können zusätzlich funktionelle Gruppen aufweisen, die mit funktionellen Gruppen des Trägermaterials ionogene oder kovalente Bindungen ausbilden. Bei den funktionellen Gruppen kann es sich um polymerisierbare Gruppen handeln, wobei durch eine Polymerisation oder Vernetzung besonders haltbare Beschichtungen erzeugt werden können.

Wesentlich für eine gute elektrische Leitfähigkeit ist, dass sich die Teilchen oder Fasern des polaren anorganischen oder organischen Materials an möglichst vielen Stellen berühren oder überkreuzen, wenn sie im Polymeren eingearbeitet sind. Dadurch entstehen elektrisch leitende Bahnen, in denen die Ladungen abfliessen können.

Die Stabilitätseigenschaften des Polymeren wie Thermostabilität, Licht- und Hydrolysebeständigkeit bleiben in den meisten Fällen nahezu unbeeinflusst.

Im Bereich niedriger Additivmengen werden auch die optischen Eigenschaften nur wenig verändert und transparente Materialien bleiben im wesentlichen transparent.

Ein Gegenstand der Erfindung ist eine Zusammensetzung, enthaltend ein thermoplastisches, strukturvernetztes elastomeres oder duroplastisches Polymer, welches
(a) ein polares, adsorptives anorganisches oder organisches Material in Form von sich berührenden Teilchen oder Fasern enthält, an die
(b) ein polares Antistatikum aus einer Mischung von
   b1) mindestens einer polaren organischen Verbindung mit mindestens 5 Kohlenstoffatomen und mindestens 3 Heteroatomen, und
   b2) das Salz einer anorganischen Protonensäure, das in der polaren organischen Verbindung solvatisiert oder komplexiert ist,
adsorptiv gebunden ist.

Beispiele für thermoplastische, strukurvernetzte oder thermisch härtbare Polymere sind nachfolgend aufgeführt.
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe lVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beispielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethyliden-norbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und-methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlor-hydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxid oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und lso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und-butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Bevorzugte Beispiele für thermoplastische, strukurvermetzte oder thermisch härtbare Polymere werden ausgewählt aus der Gruppe, bestehend aus Polyolefinen, Polystyrolen, Polymeren aus α,β-ungesättigten Säuren, halogenhaltigen Polymeren, Homo- und Copolymeren von cyclischen Ethern, Polymere von ungesättigten Alkoholen und Aminen, Polyacetalen, Polyphenylenoxide, Polyurethanen, Polyamiden, Polyestern, Polyharnstoffen, Polycarbonaten, Polysulfonen, Vernetzungsprodukten aus Aldehyden einerseits und Phenolen, Harnstoff oder Melamin andererseits, Alkydharzen, vernetzbaren Acrylharzen, vernetzten Epoxidharzen, Cellulose oder Naturkautschuk.

Besonders bevorzugt sind Polyolefine, Polystyrole, Polymere aus α,β-ungesättigten Säuren, halogenhaltige Polymere, insbesondere PVC, Homo- und Copolymeren von cyclischen Ethern, insbesondere mit Bisphenol - A - diglycidylether.

Ganz besonders bevorzugt sind Polyolefine wie Polyethylen in seinen verschiedenen Modifikationen sowie Polypropylen oder ein halogenhaltiges Polymer wie zum Beispiel Polyvinylchlorid (PVC) insbesondere als Suspensions- und Massepolymerisat.

Das polare, adsorptive anorganische oder organische Material kann in Form von Fasern oder diskreten Teilchen vorliegen. Die Adsorption kann an der Oberfläche und/oder in porösen Hohlräumen der Fasern oder Teilchen erfolgen.

Porös bedeutet im Zusammenhang mit der vorliegenden Erfindung, dass die anorganischen oder organischen Materialien innere Hohlräume aufweisen mit einer inneren Oberfläche von mindesten 1 m²/g und so in der Lage sind, Stoffe und lonen darin aufzunehmen und zu speichern.

Die innere Oberfläche kann zum Beispiel nach der BET-Methode bestimmt werden. Wenn das anorganische oder organische Material porös ist, beträgt die innere Oberfläche bevorzugt 5-500 m²/g

Als poröse, adsorptive anorganische Materialien können zum Beispiel natürliche Gesteinsmehle wie Calcit, Talkum, Kaolin, Diatomeenerde, Montmorillonit oder Attapulgit verwendet werden. Es können auch Schichtsilikate wie Sepiolit oder Bentonit, hochdisperse Kieselsäuren, synthetische hoch saugfähige Kieselsäure, Kieselgele, Molekularsieb-Zeolithe, Bimsstein, Ziegelbruch oder poröses Glas verwendet werden.

Die porösen, adsorptiven anorganischen Materialien können in wässriger Lösung sauer, neutral oder basisch reagieren.
Unter Molekularsieb - Zeolithen werden kristalline, hydratisierte Aluminiumsilikate, synthetisiert oder natürlich vorkommend, mit Gerüststruktur, die austauschbare Alkali-bzw. Erdalkalikationen enthalten, verstanden. (Definition nach D. W. Breck, Zeolite Molecular Sieves, J. Wiley, New York, 1974).

Beispiele für geeignete Molekularsieb - Zeolithe sind : Zeolith A, Zeolith ZSM-5, Mordenit, Zeolith L, Zeolith X, Zeolith Y, in ihrer Na-, K-, oder Ca-Form.

Geeignet sind auch Schichtsilikate der Phyllosilikat-Klasse mit tetraedrischer Umgebung der Si-Atome durch Sauerstoffatome. Zwei dieser tetraedrischen Si-Schichten sind durch eine Schicht von oktaedrisch koordiniertem Metall wie zum Beispiel Al oder Mg über die Sauerstoffatome verbunden. Dadurch ergibt sich eine Schichtung von Tetraedern, Oktaedern und Tetraedern, die bis zur nächsten sich wiederholenden Struktureinheit über einen zweidimensionalen Zwischenraum getrennt sind. In diesem Zwischenraum können Gegenionen zum Ladungsausgleich vorhanden sein. Mögliche Gegenionen sind Metallionen, Oligo-, Polyoxymetallionen oder organische Kationen.

Besonders geeignet sind Phyllosilikate, die einen fibrösen Aufbau aufweisen. Insbesondere weist die Hormit-Gruppe die Eigenschaft auf kettenartige, fibröse Strukturen mit kanalartigen Hohlräumen auszubilden; sie ist besonders gut geeignet.

Ganz besonders bevorzugt verwendet man als fibröse Schichtsilikate Attapulgit oder Sepiolit.

Mischungen verschiedener fibröser Schichtsilikate untereinander oder Mischungen mit Molekularsieb - Zeolithen sind ebenfalls gut geeignet.

Eine Übersicht über die Hormit-Gruppe und ihr Vorkommen findet sich in Ullman Encyclopedia of Ind. Chem., 5-te Ausgabe 1986, VCH Verlag Weinheim, Vol A7, Seite 118.

Natürliche und synthetische poröse, adsorptive anorganische Materialien sind vielfach im Handel erhältlich.

Als poröse, adsorptive organische Materialien können zum Beispiel synthetisch hergestellte poröse Polymerisate, wie zum Beispiel Harnstoff-Formaldehyd Polykondensate (Pergopak) verwendet werden, aber auch natürlich vorkommende sorptive, poröse Naturstoffe.

Als adsorptive organische Fasern können eine Vielzahl von granulierten oder faserartigen, natürlich vorkommenden organischen Materialien wie zerkleinerte Holz- oder Pflanzenrückstände oder aufbereitete Naturfasern eingesetzt werden.

Bevorzugte natürliche vorkommende Fasern sind zum Beispiel Cellulosefasern wie Baumwolle, Bast, Kapok, Jute, Ramie, Flachs oder Hanf. Es können aber auch Woll- oder Seidefasern eingesetzt werden.

Die natürlich vorkommende Cellulose kann weiter derivatisiert sein, zum Beispiel als Viscose, als Celluloseester oder Celluloseether. Die Ether oder Ester können verschiedene Durchschnittssubstitutionsgrade aufweisen, die üblicherweise zwischen 1 und 3 liegen.

Die organischen Fasermaterialien können in Form von langen gesponnenen Fasern oder in Form geschnittener Stapelfasern verwendet werden.
Es ist auch möglich, die Fasern in Form eines Flächennetzwerks, als Webmuster, als Vlies oder als Filz einzusetzen.

Es ist auch möglich künstlich hergestellte Polymerfasern zu verwenden, sofern diese eine genügend hohe Polarität an der Oberfläche aufweisen und das polare Antistatikum adsorptiv binden.
Beispiele für geeignete Fasern sind Polyamid-, Polyester- oder Polyacrylnitrilfasern. Die Oberfläche von an sich unpolaren Fasern wie zum Beispiel Polyolefinfasem lässt sich durch nachträgliche chemische und/oder physikalische Behandlung noch so modifizieren, dass auch diese Fasern erfindungsgemäss eingesetzt werden können. Ein typisches Beispiel für eine derartige Modifizierung ist die nachträgliche Plasma- oder Coronabehandlung von zum Beispiel Polypropylenfasern.

Wenn polare Polymerfasern wie zum Beispiel Polyamidfasem verwendet werden, so weist die polare organische Verbindung, die darauf adsorbiert wird bevorzugt eine funktionelle Gruppe auf, die sich polymerisieren oder vernetzen lässt. Durch diese Polymerisation oder Vernetzung werden besonders dauerhafte antistatische Eigenschaften erzielt.

Um die gewünschte vorteilhafte Wirkung zu erzielen, müssen die Fasern oder Partikel in der Polymermatrix in Kontakt miteinander stehen, da dadurch die Volumenleitfähigkeit über lonen oder Elektronenleitung geschehen kann.

Die anorganischen oder organischen Teilchen können in Form von Nadeln, Plättchen, Zylindern, versetzten Plättchen (Whiskern), regelmässigen oder unregelmässigen Kugeln oder sonstiger unregelmässiger Gestalt vorliegen.

Sie weisen im allgemeinen eine mittlere Teilchengrösse von 1 bis 5000, vorzugsweise 10 bis 1000 und ganz besonders bevorzugt 50 bis 500 Mikrometer auf.

Bevorzugt sind Teilchen, die nicht sphärisch sind und sich überwiegend in eine Richtung erstrecken. Beispiele sind Nadeln, Zylinder und Plättchen.

Mit Vorteil werden polare anorganische oder polare organische Fasern verwendet, da sich damit ein niedrigerer Füllgrad bei guter Leitfähigkeit erzielen lässt, als mit sphärischen Partikeln.

Die anorganischen oder organischen Fasern weisen im allgemeinen eine Länge von 0,01 bis 200 mm, bevorzugt 0,1 bis 20 mm auf.
Das Antistatikum besteht zum einen Teil aus einer polaren organischen Verbindung mit mindestens 5 Kohlenstoffatomen und mindestens 3 Heteroatomen. Beispiele für Heteroatome sind: Sauerstoff, Stickstoff, Schwefel oder Phosphor in ihren verschiedenen Oxidationsstufen.

Erfindungsgemäss zu verwendende Antistatika sind in grosser Zahl bekannt und zum Beispiel in Kunststoffe 67 (1977) 3, Seiten 154-159 beschrieben.

Beispiele für polare organische Verbindungen mit mindestens 5 Kohlenstoffatomen und mindestens 3 Heteroatomen die das Salz einer anorganischen Protonensäure, solvatisieren oder komplexieren können sind: Polyether, Kronenether, Polyole, Polyimine, Polyamine, Polymere, die sich vom Pyridin ableiten, makrozyklische Azaverbindungen, Polysulfide oder Polyphosphine.

Bevorzugt weist die polare organische Verbindung 3 bis 20 Heteroatome und 5 bis 100 Kohlenstoffatome auf.

Bevorzugte Heteroatome sind Sauerstoff und Stickstoff.

Das Molekulargewicht der polaren organischen Verbindungen beträgt bevorzugt 200 bis 5000, besonders bevorzugt 300 bis 3000 Dalton.

Die polaren organischen Verbindungen sind bevorzugt bei einer Temperatur bis zu 60° C flüssig, oder in organischen Lösungsmitteln löslich.

Beispiele für polymerisierbare funktionelle Gruppen sind olefinisch ungesättigte Kohlenstoffbindungen, die sich zum Beispiel von α, β- ungesättigten Carbonsäuren oder deren Derivaten ableiten, Glycidylgruppen wie zum Beispiel Glycidylether oder lsocyanatgruppen.

Beispiele für anorganische Salze, die erfindungsgemäss eingesetzt werden können, sind Zn-, Alkali-, Erdalkali- oder Ammoniumsalzen von anorganischen Mineralsäuren, Oxosäuren oder Niederalkylsulfonsäuren.
Bevorzugt wird das anorganische Salz ausgewählt aus der Gruppe, bestehend aus LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Ca(CF₃SO₃)₂, Mg(ClO₄)₂, Mg(CF₃SO₃)₂, Zn(ClO₄)₂, Zn(PF₆)₂ und Ca(CF₃SO₃)₂.

Bevorzugt ist eine Zusammensetzung, enthaltend ein thermoplastisches, strukturvernetztes elastomeres oder duroplastischesPolymer, welches
(a) ein polares, adsorptives anorganisches oder organisches Material in Form von sich berührenden Teilchen oder Fasern enthält, an die
(b) ein polares Antistatikum aus einer Mischung von
   (b1) einem Polyoxyalkylen der Formel (I)
      R₁-O-[CH(R₃)-CH₂-O-]ₙ-[CH₂-[CH(OH)]ₚ-CH₂-O]_{q}-[C(O)]ᵣ-R₂ (I) adsorptiv gebunden ist, wobei R₁ H, C₁-C₂₄-Alkyl, C₂-C₂₄-Alkenyl, C₁-C₂₄-Alkyl-C(O)-, C₂-C₂₄-Alkenyl-C(O)-, CH₂=CH-C(O)-oder CH₂=C(CH₃)-C(O)- bedeutet,
      R₂ C₁-C₂₄-Alkyl, C₂-C₂₄-Alkenyl, CH₂-COOH, N(C₁-C₈-Alkyl)₃Hal oder wenn r 0 ist zusätzlich CH₂=CH-C(O)- oder CH₂=C(CH₃)-C(O)- bedeutet,
      R₃ H oder CH₃ ist,
      Hal für Cl, Br oder J steht,
      n eine Zahl grösser oder gleich 2,
      p eine Zahl von 1 bis 6, und
      q und r, unabhängig voneinander, 0 oder 1 sind;
      und in dem
   (b2) ein anorganisches Salz der Formel {M^{z+}ₐA^{(az/b)-}_{b}} komplexiert oder solvatisiert ist, wobei M ein z-wertiges Alkalimetall-, Erdalkalimetall- oder Zinkkation,
      a und b, unabhängig voneinander, eine Zahl zwischen 1 und 6, und
      A ein Anion einer anorganischen Protonensäure oder einer organischen Sauerstoffsäure des Schwefels ist.

Die erfindungsgemäss als Komponente (b1) verwendbaren Polyoxyalkylene der Formel (1)

R₁-O-[CH(R₃)-CH₂-O-]ₙ-[CH₂-[CH(OH)]ₚ-CH₂-O]_{q}-[C(O)]ᵣ-R₂ (I),

wobei
R₁ H, C₁-C₂₄-Alkyl, C₂-C₂₄-Alkenyl, C₁-C₂₄-Alkyl-C(O)-, C₂-C₂₄-Alkenyl-C(O)-, CH₂=CH-C(O)-oder CH₂=C(CH₃)-C(O)- bedeutet,
R₂ C₁-C₂₄-Alkyl, C₂-C₂₄-Alkenyl, CH₂-COOH, N(C₁-C₈-Alkyl)₃Hal oder wenn r 0 ist zusätzlich CH₂=CH-C(O)- oder CH₂=C(CH₃)-C(O)- bedeutet,
R₃ H oder CH₃ ist,
Hal für Cl, Br oder J steht,
n eine Zahl grösser oder gleich 2,
p eine Zahl von 1 bis 6, und
q und r, unabhängig voneinander, 0 oder 1 sind,
sind allgemein bekannt und entweder im Handel erhältlich oder durch bekannte, einfache chemische Reaktionen herstellbar.

Bedeuten Substituenten in den Verbindungen der Formel(I) Alkyl mit 1 bis 24 Kohlenstoffatomen, so kommen hierfür Reste wie Methyl, Ethyl, Propyl, Butyl, Pentyl, Hexyl, Heptyl, Octyl, Nonyl, Decyl, Undecyl, Dodecyl, Tridecyl, Tetradecyl, Hexadecyl, Octadecyl, Eicosyl, Docosyl und Tetracosyl sowie entsprechende verzweigte Stellungsisomere in Frage.

Bedeuten Substituenten in den Verbindungen der Formel(I) Alkenyl mit 1 bis 24 Kohlenstoffatomen, so leiten sich diese Reste von den genannten Alkylresten ab, wobei eine oder mehrere Doppelbindung vorhanden sein können. Handelt es sich nur um eine Doppelbindung, so ist diese bevorzugt in der Mitte der Kohlenwasserstoffkette angeordnet. Sind mehrere Doppelbindungen in der Kohlenwasserstoffkette vorhanden, so leitet sich dieser Rest bevorzugt von einer ungesättigten Fettsäure ab. Besonders bevorzugt ist als Alkenylrest Oleyl.

Bevorzugt bedeutet in den Verbindungen der Formel (I) R₁H, C₁-C₄-Alkyl, CH₂=CH-C(O)-oder CH₂=C(CH₃)-C(O)-.

Bevorzugt bedeutet in den Verbindungen der Formel (I) R₂C₆-C₂₀-Alkyl, C₆-C₂₀-Alkenyl oder N(C₁-C₈-Alkyl)₃Cl, CH₂=CH-C(O)- oder CH₂=C(CH₃)-C(O)-.

Bevorzugt sind in den Verbindungen der Formel (I) n eine Zahl zwischen 2 und 20 und p eine Zahl zwischen 2 und 6.

Besonders bevorzugte Einzelverbindungen der Formel I sind Polypropylenglykollaurylester, Polypropylenglykololeylether, Polypropylenglykolmethyldiethylammoniumchlorid, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether, Polyethylenglykollaurylethercarbonsäure Polyethylenglykoldiacrylat,-mono und -triacrylat oder Polyethylenglykoldimethacrylat, mono- und -trimethacrylat.

Setzt man eine olefinisch ungesättigte Verbindung ein, so kann man diese auf der Faser polymerisieren oder vernetzen. Es bildet sich dadurch eine Beschichtung der Faser aus, in der das anorganische Salz komplexiert oder solvatisiert ist.

Eine besonders günstige Ausführung wird erhalten, wenn man Polyethylenglykoldiacrylat oder Polyethylenglykoldimethacrylat verwendet und dieses auf dem polaren anorganischen oder organischen Material polymerisiert oder vernetzt. Man erhält auf diese Weise besonders beständige antistatische Ausrüstungen, bei denen ein Ausschwitzen von anorganischem Salz oder organischer Komponente weitestgehend ausgeschlossen ist.

Die Vernetzung kann auf der Oberfläche der Fasern oder Partikel erfolgen, aber auch in inneren Hohlräumen (Poren).

Geeignete weitere Vernetzungskomponenten, die zusätzlich mitverwendet werden können sind beispielsweise Trimethylolpropantriacrylat, Trimethylolpropantrimethacrylat oder andere dreifach funktionelle Verbindungen. Diese Verbindungen sind im Handel erhältlich.

Die Vernetzungs- oder Polymerisationsreaktion ist bekannt und kann entweder thermisch oder photochemisch durchgeführt werden. Katalysatoren sind beispielsweise Peroxidverbindungen wie H₂O₂ oder Photoinitiatoren wie Benzildimethylketal. Diese Katalysatoren sind bekannt und ebenfalls im Handel erhältlich.

Das polare anorganische oder organisches Material wird bevorzugt in einer Menge von 0,01 bis 70 Gewichtsteilen, besonders bevorzugt von 0,1 bis 30 Gewichtsteilen, bezogen auf 100 Gewichtsteile des Polymer eingesetzt.

Die polaren organischen Verbindungen mit mindestens 5 Kohlenstoffatomen und mindestens 3 Heteroatomen werden bevorzugt in einer Menge von 0,01 bis 20 Gewichtsteilen, bezogen auf 100 Teile Polymer eingesetzt.

Das verwendete anorganische Salz wird bevorzugt in einer Menge von 0,01 bis 5 Gewichtsteilen, bezogen auf 100 Teile des Polymeren eingesetzt.

Das Verhältnis der organischen Verbindung mit mindestens 5 Kohlenstoffatomen und mindestens 3 Heteroatomen zu dem anorganischen Salz beträgt bevorzugt von 200 zu 1 bis 1 zu 1.

Im allgemeinen vermischt man zunächst das anorganische Salz mit der polaren organischen Verbindung aus mindestens 5 Kohlenstoffatomen und mindestens 3 Heteroatomen, und tränkt anschliessend das polare anorganische oder organische Material mit diesem Gemisch.

Das erfindungsgemässe thermoplastische, strukurvernetzte oder duroplastische Polymer kann weitere Additive enthalten. Diese weiteren Additive gehören vor allem zur Gruppe der Thermo- und/oder Lichtstabilisatoren. Die thermische Stabilisierung umfasst dabei sowohl die Verarbeitung wie auch den Gebrauch (Langzeitstabilität). Diese weiteren Additive sind dem Fachmann bekannt und zum überwiegenden Teil kommerziell erhältlich.

Handelt es sich um antistatische halogenhaltige Polymere, wie oben beschrieben, so enthalten diese zweckmässig zusätzlich mindestens eine anorganische Zink-, Barium-, Cadmium-, Aluminium-, Calcium-, Magnesium- oder Seltenerd-Verbindung, wie beispielsweise Zinkoxid, -hydroxid, -chlorid, -sulfid oder überbasische Zinkoxid/hydroxid-Additionsverbindungen, oder eine organische Zink-, Barium-, Cadmium-, Aluminium-, Calcium-, Magnesium- oder Seltenerd-Verbindung aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate.
Die genannten Metallverbindungen können dabei als Gemische unterschiedlicher Verbindungen vorliegen. Bevorzugt sind dabei sogenannte synergistische Metallseifenmischungen, beispielsweise der Metalle Ca und Zn oder Ba und Zn. Auch können organische Zink-, Barium-, Cadmium-, Aluminium-, Calcium-, Magnesium- oder Seltenerd-Verbindungen auf einen Hydrotalcit, Zeolith oder Dawsonit gecoatet sein; siehe hierzu auch DE-A-4031818.

Als Antioxidantien kommen beispielsweise in Betracht:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cydopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl+(1'-methyl-heptadec-1'-yl)-phenol, 2,4-Dimethyl-6-(1'-methyl-tridec-1-yl)-phenol, Octylphenol, Nonylphenol und Mischungen davon.
2. Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tertbutyl-2-methylphenol), 4,4'-Thio-bis-(3,6-di-sec.-amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcydohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycolbis-[3,3-bis-(3'-tert-butyl-4'-hydroxyphenyl)-butyrat], Bis-(3-tert-butyl-4-hydroxy-5-methylphenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-ditert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-. N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2 ,2-bis-(3,5-di-tert-butyl-4-hydrnxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-di-tert-butyl-4-hydroxyphenoxy)-1,2,3-triazin, 1 ,3,5-Tris-(3,5-di-tert-butyl-4-hydroxybenzyl)-isocyanurat, 1 ,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1 ,3,5-triazin, 1 ,3,5-Tris-(3,5-di-tert-butyl-4-hydroxyphenylpropionyl)-hexahydro-1,3,5-triazin, 1 ,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters, Triphenylphosphit, Diphenylalkylphosphite, Phenyldialkyl-phosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-di-phosphit, Bis-(2,4-di-tert-butylphenyl)-pentaerythritdiphosphit, Bis-(2,6-di-tert-butyl-4-methyl-phenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyldibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, (C₉H₁₉-C₆H₄)_{1,5}-P-(O-C₁₂₋₁₃H₂₅₋₂₇)_{1,5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3.5-Di-tert-butyl-4-hydroxvphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis--(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3.5-Dicyclohexyl-4-hydroxyphenul)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis--(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3.5-Di-tert-butyl-4-hvdroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3.5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
17. Ester der Thiodiessiasäure und Thiodipropionsäure

Bevorzugt sind Antioxidantien der Gruppen 5, 10 und 14 insbesondere 2,2-Bis-(4-hydroxyphenyl)-propan, Ester der 3,5-Di-tert-butyl-4-hydroxyphenylpropionsäure mit Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmässig 0,1 bis 10 und insbesondere 0,1 bis 5 Gew.-Teilen, bezogen auf 100 Gew.-Teile Polymer, angewendet werden.

Als UV-Absorber und Lichtschutzmittel kommen beispielsweise in Betracht:
1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlorbenztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis--(α,α-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonyl-ethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; [R-CH₂CH₂-COO(CH₂)₃]- mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butyl-phenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-phenylacrylsäure-ethylester bzw. -isooctylester, α-Carbo-methoxy-zimtsäuremethylester, α-Cyano-β-methyl-p-methoxy-zimtsäuremethylester bzw.-butylester, α-Carbomethoxy-p-methoxy-zimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethyl-butyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure--monoalkylestem, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1 ,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1 ,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethyl-piperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-amino-propylamino)äthan, Kondensationsprodukt aus 2-Chlor-4,6-di-(4-n-butylamino-1,2,2,6,6--pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetra-methyl-4-piperidyl)pyrrolidin-2,5-dion, 3-Dodecyl-1-(1,2,2,6,6-pentamethyl-4-piperidyl)-pyrrolidin-2,5-dion, sowie Chimassorb966.
7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1.3.5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1 ,3,5-triazin, 2-(2-Hydroxy-4-dodecyloxyphenyl)-4,6-bis(2,4-dimethyl-phenyl)-1 ,3,5-triazin, 2-[2-hydroxy-4-(2-hydroxy-3-butyloxy-propyloxy)phenyl]-4,6-bis(2,4-dimethylphenyl)-1 ,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht: Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat oder Ethylenglykolbismercaptoacetat.

Ebenfalls Gegenstand der Erfindung ist ein Verfahren zur Herstellung eines antistatisch ausgerüsteten thermoplastischen, strukturvernetzten oder duroplastischen Polymeren, dadurch gekennzeichnet, dass man unter Verwendung von Vorrichtungen, wie Kalander, Mischer, Kneter, Extruder und dergleichen, eine Zusammensetzung enthaltend (a) ein polares, adsorptives anorganisches oder organisches Material in Form von Teilchen oder Fasern, an die
(b) ein polares Antistatikum aus einer Mischung von b1 ) mindestens einer polaren organischen Verbindung mit mindestens 5 Kohlenstoffatomen und mindestens 3 Heteroatomen, und b2) dem Salz einer anorganischen Protonensäure, das in der polaren organischen Verbindung solvatisiert oder komplexiert ist, adsorptiv gebunden ist, als solche oder in Form ihrer einzelnen Bestandteile und gegebenenfalls weiterer Zusätze mit einem thermoplastischen, strukturvernetzten elastomeren oder duroplastischen Polymeren vermischt.

Die Herstellung kann auf an sich bekannte Weise erfolgen, wozu man unter Verwendung an sich bekannter Vorrichtungen, wie Kalander, Mischer, Kneter, Extruder und dergleichen, die genannten Additive und gegebenenfalls weitere Zusätze mit dem Polymer vermischt. Die Additive können dabei einzeln oder in Mischung miteinander zugegeben werden. Es ist auch möglich, sogenannte Masterbatches einzusetzen.

Ein nach vorliegender Erfindung erhältliches antistatisch-ausgerüstetes thermoplastisches Polymer kann auf bekannte Weisen in die gewünschte Form gebracht werden. Solche Verfahren sind beispielsweise Mahlen, Kalandrieren, Extrudieren, Spritzgiessen, Sintern, Press/Sintern oder Spinnen, ferner Extrusions-Blasen oder eine Verarbeitung nach dem Plastisol-Verfahren. Das antistatisch-ausgerüstete thermoplastische Polymer kann auch zu Schaumstoffen verarbeitet werden.

Ein weiterer Gegenstand der Erfindung ist eine Zusammensetzung, enthaltend
(a) ein polares, adsorptives anorganisches oder organisches Material in Form von Teilchen oder Fasern, an die
(b) ein polares Antistatikum aus einer Mischung von
   b1) mindestens einer polaren organischen Verbindung mit mindestens 5 Kohlenstoffatomen und mindestens 3 Heteroatomen,
      und
   b2) dem Salz einer anorganischen Protonensäure, das in der polaren organischen Verbindung solvatisiert oder komplexiert ist, adsorptiv gebunden ist.

Bevorzugt ist eine Zusammensetzung, enthaltend
(a) ein polares, adsorptives anorganisches oder organisches Material in Form von Teilchen oder Fasern, an die
(b) ein polares Antistatikum aus einer Mischung von
   (b1) einem Polyoxyalkylen der Formel (I)

      R₁-O-[CH(R₃)-CH₂-O-]ₙ-[CH₂-[CH(OH)]ₚ-CH₂-O]_{q}-[C(O)]ᵣ-R₂ (I)

      adsorptiv gebunden ist, wobei
      R₁H, C₁-C₂₄-Alkyl, C₂-C₂₄-Alkenyl, C₁-C₂₄-Alkyl-C(O)-, C₂-C₂₄-Alkenyl-C(O)-, CH₂=CH-C(O)-oder CH₂=C(CH₃)-C(O)- bedeutet,
      R₂ C₁-C₂₄-Alkyl, C₂-C₂₄-Alkenyl, CH₂-COOH, N(C₁-C₈-Alkyl)₃Hal oder wenn r 0 ist zusätzlich CH₂=CH-C(O)- oder CH₂=CCH₃-C(O)- bedeutet,
      R₃ H oder CH₃ ist,
      Hal für Cl, Br oder J steht,
      n eine Zahl grösser oder gleich 2,
      p eine Zahl von 1 bis 6, und
      q und r, unabhängig voneinander, 0 oder sind; und
   (b2) ein anorganisches Salz der Formel {M^{z+}ₐA^{(az/b)-}_{b}} darin komplexiert oder solvatisiert ist, wobei
      M ein z-wertiges Alkalimetall-, Erdalkalimetall- oder Zinkkation,
      a und b, unabhängig voneinander, eine Zahl zwischen 1 und 6, und
      A ein Anion einer anorganischen Protonensäure oder einer organischen Sauerstoffsäure des Schwefels ist.

Für die einzelnen Mischungsbestandteile gelten die vorstehend erläuterten Bevorzugungen, ebenso kann diese Zusammensetzung die zuvor beschriebenen weiteren Bestandteile enthalten.

Ein weiterer Gegenstand der Erfindung ist die Verwendung einer erfindungsgemässen Zusammensetzung zur Verbesserung der antistatischen Eigenschaften von thermoplastischen, strukturvernetzten elastomeren oder duroplastischen Polymeren. Die erfindungsgemässe Polymerzusammensetzung eignet sich besonders für Drahtummantelungen und Kabelisolierungen. Es können aber auch Dekorationsfolien, Schaumstoffe, Agrarfolien, Schläuche, Dichtungsprofile und Bürofolien hergestellt werden.

Die erfindungsgemässen Polymerzusammensetzungen können auch als Formmassen zur Herstellung von Hohlkörpern (Flaschen), Verpackungsfolien (Tiefziehfolien), Blasfolien, Crash pad-Folien (Automobile), Rohren, Schaumstoffen, Schwerprofilen (Fensterrahmen), Lichtwandprofilen, Bauprofilen, Sidings, Fittings, Bürofolien und Apparatur-Gehäusen (Computer, Haushaltsgeräte) verwendet werden.

Ebenfalls Gegenstand der Erfindung ist daher die Verwendung einer erfindungsgemässen Zusammensetzung für Drahtummantelungen oder Kabelisolierungen.

Die folgenden Beispiele erläutern die Erfindung.

### Beispiel 1

Zellstoffplatten (Hard Wood, gebleicht) werden in Streifen geschnitten (ca. 6×1 cm²) und davon 7.28 g in eine Lösung von Polyethylenglykollaurat (Irgastat 51, Ciba), enthaltend 10% Li-methylsulfonat, gelegt. Die Streifen liegen in einer Porzellanschale, die sich in einem evakuierbaren Gefäss befindet. Es wird ca. 30 Minuten bei einem Druck von 0.5 mbar entgast. Anschliessend lässt man die imprägnierten Streifen stehend abtropfen. Das Gewicht der imprägnierten Cellulose beträgt nun 11.39 g. Die so getränkten Streifen werden in ca. 1×1 cm² grosse Stücke geschnitten und in einer Ultrazentrifugalmühle (Retsch, Typ ZM 1000) mit einem Ringsieb von 0.5 mm zu Fasern zerkleinert.

### Beispiel 2

Zu 50 g Polypropylen Moplen FLF 20 werden 4.0 g des in Beispiel 1 beschriebenen imprägnierten Zellstoffs gegeben und vorsichtig gemischt. Diese Mischung wird in einem 2-Walzenstuhl (Kalander) bei 180 °C 5 Minuten zu einem Walzfell verarbeitet (Spalt 0.5 mm). Anschliessend werden Platten mit einer Metallschablone (15×15×0.05 cm³) unter Druck in einer geheizten, hydraulischen Presse hergestellt (Verarbeitung 5 Minuten 190 °C). Die so hergestellten Platten zeigen einen Durchgangswiderstand R_{D} von 4×10¹¹ Ohm (gemessen mit einer Messspannung von 500 V und einer Ringelektrode 20 cm², Spalt 0.5 cm (DIN 53482) bei 22 °C). Nach Lagerung bei 22 °C und ca. 70 % relativer Feuchte während einer Woche fiel der R_{D} auf 6×10⁷ Ohm (Ringelektrode) und der Oberflächenwiderstand Rₒ beträgt 4.2×10⁸ Ohm (Federzungenelektrode nach DIN 53482).

### Beispiel 3

Ramiefasern (6 mm lang, Typ 290 der Firma Fischer CH-Dottikon) werden in einer Ultrazentrifugalmühle (Retsch, Typ ZM 1000) mit 0.12 mm Ringsieb gemahlen. 3 g dieser Fasern werden in ein Becherglas gegeben, mit einer Lösung aus Polyethylenglykol-400-diacrylat Sartomer SR 344 und 4 % NaClO₄·H₂O überschichtet, verrührt und in einem Vakuumgefäss bei 0.5 mbar ca. 30 Minuten entgast. Danach wird die Lösung abfiltriert und der Rückstand (= imprägnierte Fasern) zwischen Filterpapier in einer hydraulischen Presse von überschüssiger Lösung befreit, Rückstand= 4.9 g.

### Beispiel 4

2 g dieser in Beispiel 3 beschriebenen imprägnierten Fasern werden fein verteilt und zu 60 g Polypropylen Moplen FLF 20 gegeben und gemischt. Die Mischung wird in einem 2-Walzenstuhl (Kalander) bei 180 °C 7 Minuten zu einem Walzfell verarbeitet (Spalt 0.5 mm). Anschliessend werden Platten mit einer Metallschablone (15×15×0.05 cm³) unter Druck in einer geheizten, hydraulischen Presse hergestellt (Verarbeitung 5 Minuten 190 °C). Die so hergestellten Platten zeigten sofort nach der Herstellung einen Durchgangswiderstand R_{D} von 9.9×10¹⁰ Ohm und einen Oberflächenwiderstand Rₒ von 1.3×10¹¹ Ohm (gemessen mit einer Messspannung von 500 V und einer Ringelektrode 20 cm², Spalt 0.5 cm (DIN 53482) bei 22 °C). Nach 2 Monaten Lagerung bei 30 - 40 % relativer Feuchte und Raumtemperatur betragen die Werte R_{D} 2.5×10⁹ Ohm und Rₒ 6.0×10¹⁰ Ohm.

### Beispiel 5

446 g Zellstoffplatten (Hard Wood, gebleicht) werden in Streifen geschnitten (ca. 2.5×14.8 cm²) und in 3 Portionen in eine Lösung bestehend aus Polyethylenglykol-400-diacrylat Sartomer SR 344 und 4 % NaClO₄·H₂O gegeben. Die Streifen sind in einem Gefäss, das sich in einem evakuierbaren Gefäss befindet. Nun wird ca. 30 Minuten bei einem Druck von 0.3 mbar entgast. Anschliessend werden die imprägnierten Streifen stehend abtropfen gelassen. Das Gewicht der imprägnierten Cellulose beträgt nun 681 g. Die so getränkten Streifen werden in ca. 1×1 cm² grosse Stücke geschnitten und in einer Ultrazentrifugalmühle (Retsch, Typ ZM 1000) zuerst mit einem Ringsieb von 2 mm und anschliessend mit einem Ringsieb von 1 mm zu Fasern zerkleinert.

### Beispiel 6

Zu je 45 g Polypropylen Profax 6501 wird vom in Beispiel 5 beschriebenen imprägnierten Zellstoff (Mengen und Messresultate siehe Tabelle 1) gegeben und vorsichtig gemischt. Diese Mischungen werden in einem 2-Walzenstuhl (Kalander) bei 180 °C während 9 Minuten zu einem Walzfell verarbeitet (Spalt 0.4 mm). Anschliessend werden Platten mit einer Metallschablone (15×15×0.05 cm³) unter Druck in einer geheizten, hydraulischen Presse hergestellt (Verarbeitung 5 Minuten 200 °C).
Die so hergestellten Platten werden 1 Woche über Blaugel getrocknet. Anschliessend werden die Oberflächenwiderstände Rₒ (mit einer Federzungenelektrode nach DIN 53482, mit einer Messspannung von 500 V bei 22 °C und trockener Atmosphäre < ca. 15% r.F.) gemessen. Die Ergebnisse sind in Tabelle 1 dargestellt.

**Tabelle 1**

| Polypropylen Profax 6501 | imprägnierter Zellstoff Beispiel 5 | Oberflächenwwiderstand Rₒ [Ohm] |
|---|---|---|
| 45.0 g | 3.0 g | 2×10¹¹ |
| 45.0 g | 2.0 g | 3×10¹¹ |
| 45.0 g | 1.5 g | 2×10¹² |
| 45.0 g | 0 g = Referenz | >2×10¹⁴ |

## Patentansprüche

1. Zusammensetzung, enthaltend ein thermoplastisches, strukturvernetztes elastomeres oder duroplastisches Polymer, welches
(a) ein polares, adsorptives anorganisches oder organisches Material in Form von sich berührenden Teilchen oder Fasern enthält, an die
(b) ein polares Antistatikum aus einer Mischung von
b1 ) mindestens einer polaren organischen Verbindung mit mindestens 5 Kohlenstoffatomen und mindestens 3 Heteroatomen, und
b2) das Salz einer anorganischen Protonensäure, das in der polaren organischen Verbindung solvatisiert oder komplexiert ist,
adsorptiv gebunden ist.

2. Zusammensetzung nach Anspruch 1, in welcher die thermoplastischen, strukurvernetzten elastomeren oder duroplastischen Polymere ausgewählt werden aus der Gruppe, bestehend aus Polyolefinen, Polystyrolen, Polymeren aus α, β-ungesättigten Säuren, halogenhaltigen Polymeren, Homo- und Copolymeren von cyclischen Ethern, Polymere von ungesättigten Alkoholen und Aminen, Polyacetalen, Polyphenylenoxide, Polyurethanen, Polyamiden, Polyestern, Polyharnstoffen, Polycarbonaten, Polysulfonen, Vernetzungsprodukten aus Aldehyden einerseits und Phenolen, Harnstoff oder Melamin andererseits, Alkydharzen, vernetzbaren Acrylharzen, vernetzten Epoxidharzen, Cellulose oder Naturkautschuk.

3. Zusammensetzung nach Anspruch 2, in welcher die thermoplastischen, strukurvernetzten elastomeren oder duroplastischen Polymere ausgewählt werden aus der Gruppe, bestehend aus Polyolefinen, Polystyrolen, Polymeren aus α, β-ungesättigten Säuren, halogenhaltige Polymeren, Homo- und Copolymeren von cyclischen Ethern.

4. Zusammensetzung nach Anspruch 1, in welcher das anorganische oder organische Material, wenn es porös ist, eine innere Oberfläche von 5-500 m²/g aufweist.

5. Zusammensetzung nach Anspruch 1, in welcher als poröse, adsorptive anorganische Materialien natürliche Gesteinsmehle wie Calcit, Talkum, Kaolin, Diatomeenerde, Montmorillonit oder Attapulgit, Schichtsilikate wie Sepiolit oder Bentonit, hochdisperse Kieselsäuren, synthetische hoch saugfähige Kieselsäure, Kieselgele, Molekularsieb-Zeolithe, Bimsstein, Ziegelbruch oder poröses Glas verwendet werden.

6. Zusammensetzung nach Anspruch 1, in welcher als poröse, adsorptive organische Materialien synthetisch hergestellte poröse Polymerisate insbesondere Harnstoff-Formaldehyd Polykondensate verwendet werden.

7. Zusammensetzung nach Anspruch 1, in welcher als adsorptive organische Fasern granulierte oder faserartige, natürlich vorkommenden organische Materialien insbesondere zerkleinerte Holz- oder Pflanzenrückstände eingesetzt werden.

8. Zusammensetzung nach Anspruch 1, in welcher als natürliche vorkommende Fasern, Baumwolle, Bast, Jute, Kapok, Ramie, Flachs, Hanf, Woll- oder Seidefasern eingesetzt werden.

9. Zusammensetzung nach Anspruch 1, in welcher die Teilchen eine mittlere Teilchengrösse von 1 bis 5000 µm aufweisen.

10. Zusammensetzung nach Anspruch 1, in welcher die anorganischen oder organischen Fasern eine Länge von 0,01 bis 200 mm aufweisen.

11. Zusammensetzung nach Anspruch 1, in welcher die polare organische Verbindungen mit mindestens 5 Kohlenstoffatomen und mindestens 3 Heteroatomen ausgewählt wird aus der Gruppe, bestehend aus Polyether, Kronenether, Polyolen, Polyiminen, Polyaminen, Polymeren, die sich vom Pyridin ableiten, makrozyklische Azaverbindungen, Polysulfiden oder Polyphosphinen.

12. Zusammensetzung nach Anspruch 11, in welcher die polare organische Verbindung eine olefinisch ungesättigte Kohlenstoffbindung, eine funktionelle Gruppe, die sich von α, β,- ungesättigten Carbonsäuren oder deren Derivaten ableitet, eine lsocyanat- oder eine Glycidylgruppe aufweist.

13. Zusammensetzung nach Anspruch 1, in welcher als anorganische Salze Zn-, Alkali-, Erdalkali- oder Ammoniumsalze von anorganischen Mineralsäuren oder Oxosäuren verwendet werden.

14. Zusammensetzung nach Anspruch 13, in welcher das anorganische Salz ausgewählt wird aus der Gruppe LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Ca(CF₃SO₃)₂, Mg(ClO₄)₂, Mg(CF₃SO₃)₂, Zn(ClO₄)₂, Zn(PF₆)₂ und Ca(CF₃SO₃)₂.

15. Zusammensetzung nach Anspruch 1, enthaltend ein thermoplastisches, strukturvernetztes elastomeres oder duroplastischesPolymer, welches
(a) ein polares, adsorptives anorganisches oder organisches Material in Form von sich berührenden Teilchen oder Fasern enthält, an die
(b) ein polares Antistatikum aus einer Mischung von
(b1 ) einem Polyoxyalkylen der Formel (I)
R₁-O-[CH(R₃)-CH₂-O]ₙ-[CH₂(CH(OH)]ₚ-CH₂-O]_{q}-[C(O)]ᵣ-R₂ (I)
adsorptiv gebunden ist, wobei
R₁ H, C₁-C₂₄-Alkyl, C₂-C₂₄-Alkenyl, C₁-C₂₄-Alkyl-C(O)-, C₂-C₂₄-Alkenyl-C(O)-, CH₂=CH-C(O)-oder CH₂=C(CH₃)-C(O)- bedeutet,
R₂ C₁-C₂₄-Alkyl, C₂-C₂₄-Alkenyl, CH₂-COOH, N(C₁-C₈-Alkyl)₃Hal oder wenn r 0 ist zusätzlich CH₂=CH-C(O)- oder CH₂=C(CH₃)-C(O)- bedeutet,
R₃H oder CH₃ ist,
Hal für Cl, Br oder J steht,
n eine Zahl grösser oder gleich 2,
p eine Zahl von 1 bis 6, und
q und r, unabhängig voneinander, 0 oder 1 sind;
und in dem
(b2) ein anorganisches Salz der Formel {M^{z+}ₐA^{(az/b)-}_{b}} komplexiert oder solvatisiert ist, wobei M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist.

16. Zusammensetzung nach Anspruch 15, worin R₁ H, C₁-C₄-Alkyl, CH₂=CH-C(O)- oder CH₂=C(CH₃)-C(O)- ist.

17. Zusammensetzung nach Anspruch 15, worin R₂ C₆-C₂₀-Alkyl, C₆-C₂₀-Alkenyl oder N(C₁-C₈-Alkyl)₃Cl, CH₂=CH-C(O)- oder CH₂=C(CH₃)-C(O)- ist.

18. Zusammensetzung nach Anspruch 15, worin n eine Zahl zwischen 2 und 20 und p eine Zahl zwischen 2 und 6 ist.

19. Zusammensetzung nach Anspruch 15, worin es sich bei den Verbindungen der Formel I um Polypropylenglykollaurylester, Polypropylenglykololeylether, Polypropylenglykolmethyldiethylammoniumchlorid, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether, Polyethylenglykollaurylethercarbonsäure Polyethylenglykoldiacrylat,-mono und -triacrylat oder Polyethylenglykoldimethacrylat, mono- und -trimethacrylat handelt.

20. Zusammensetzung nach Anspruch 1, worin das polare anorganische oder organische Material in einer Menge von 0,01 bis 70 Gewichtsteilen, bezogen auf 100 Gewichtsteile des Polymer vorhanden ist.

21. Zusammensetzung nach Anspruch 1, worin die polaren organischen Verbindungen mit mindestens 5 Kohlenstoffatomen und mindestens 3 Heteroatomen in einer Menge von 0,01 bis 20 Gewichtsteilen, bezogen auf 100 Teile Polymer vorhanden sind.

22. Zusammensetzung nach Anspruch 1, worin das verwendete anorganische Salz in einer Menge von 0,01 bis 5 Gewichtsteilen, bezogen auf 100 Teile des Polymeren vorhanden ist.

23. Zusammensetzung nach Anspruch 1, worin das Verhältnis der organischen Verbindung mit mindestens 5 Kohlenstoffatomen und mindestens 3 Heteroatomen zu dem anorganischen Salz von 200 zu 1 bis 1 zu 1 beträgt.

24. Verfahren zur Herstellung eines antistatisch ausgerüsteten thermoplastischen, strukturvernetzten elastomeren oder duroplastischen Polymeren, dadurch gekennzeichnet, dass man unter Verwendung von Vorrichtungen, wie Kalander, Mischer, Kneter, Extruder eine Zusammensetzung, enthaltend
(a) ein polares, adsorptives anorganisches oder organisches Material in Form von Teilchen oder Fasern, an die
(b) ein polares Antistatikum aus einer Mischung von
b1) mindestens einer polaren organischen Verbindung mit mindestens 5 Kohlenstoffatomen und mindestens 3 Heteroatomen, und
b2) dem Salz einer anorganischen Protonensäure, das in der polaren organischen Verbindung solvatisiert oder komplexiert ist, adsorptiv gebunden ist,
als solche oder in Form ihrer einzelnen Bestandteile und gegebenenfalls weiterer Zusätze mit einem thermoplastischen, strukturvernetzten elastomeren oder duroplastischen Polymeren vermischt.

25. Zusammensetzung, enthaltend
(a) ein polares, adsorptives anorganisches oder organisches Material in Form von Teilchen oder Fasern, an die
(b) ein polares Antistatikum aus einer Mischung von
b1) mindestens einer polaren organischen Verbindung mit mindestens 5 Kohlenstoffatomen und mindestens 3 Heteroatomen,
und
b2) dem Salz einer anorganischen Protonensäure, das in der polaren organischen Verbindung solvatisiert oder komplexiert ist, adsorptiv gebunden ist.

26. Zusammensetzung nach Anspruch 25, enthaltend
(a) ein polares, adsorptives anorganisches oder organisches Material in Form von Teilchen oder Fasern, an die
(b) ein polares Antistatikum aus einer Mischung von
(b1) einem Polyoxyalkylen der Formel (I)
R₁-O-[CH(R₃)-CH₂-O-]ₙ-[CH₂-[CH(OH)]ₚ-CH₂-O]_{q}-[C(O)],-R₂ (I)
adsorptiv gebunden ist, wobei
R₁ H, C₁-C₂₄-Alkyl, C₂-C₂₄-Alkenyl, C₁-C₂₄-Alkyl-C(O)-, C₂-C₂₄-Alkenyl-C(O)-, CH₂=CH-C(O)-oder CH₂=C(CH₃)-C(O)- bedeutet,
R₂ C₁-C₂₄-Alkyl, C₂-C₂₄-Alkenyl, CH₂-COOH, N(C₁-C₈-Alkyl)₃Hal oder wenn r 0 ist zusätzlich CH₂=CH-C(O)- oder CH₂=CCH₃-C(O)- bedeutet,
R₃ H oder CH₃ ist,
Hal für Cl, Br oder J steht,
n eine Zahl grösser oder gleich 2,
p eine Zahl von 1 bis 6, und
q und r, unabhängig voneinander, 0 oder 1 sind; und
(b2) ein anorganisches Salz der Formel {M^{z+}ₐA^{(az/b)-}_{b}} darin komplexiert oder solvatisiert ist, wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist.

27. Verwendung einer Zusammensetzung nach Anspruch 25 zur Verbesserung der antistatischen Eigenschaften von thermoplastischen, strukturvernetzten elastomeren oder duroplastischen Polymeren.

28. Verwendung einer Zusammensetzung nach Anspruch 25 für Drahtummantelungen oder Kabelisolierungen.
